# EUROPEAN PATENT SPECIFICATION

(11) **EP 3 196 172 B1**
(45) Date of publication and mention of the grant of the patent: **17.10.2018**
(21) Application number: 16152099.4
(22) Date of filing: 20.01.2016
(51) Int. Cl.: C03B 27/04

(54) **DEVICE USING COOLING AIR FOR TEMPERING GLASS**
VORRICHTUNG ZUM TEMPERN EINER GLASSCHEIBE MITTELS GEKÜHLTER LUFT
DISPOSITIF À AIR REFROIDI POUR TREMPER DU VERRE.

(43) Date of publication of application: 26.07.2017
(73) Proprietor: South Glass Technology Co., Ltd, Foshan, Guangdong 528308 (CN)
(72) Inventor: ZHOU, Junshan, Foshan, Guangdong, 528308 (CN)
(74) Representative: Karakatsanis, Georgios

(56) References cited:
- EP-A1- 0 558 912
- EP-A2- 0 968 970
- CN-A- 103 992 027
- CN-U- 203 960 044
- US-A- 3 293 015

## Description

### Technical Field

The present invention relates to a cooling apparatus, particularly relates to a device utilizing air for tempered glass cooling.

### Background Art

In industrial production, cooling is a common production process. For example, in the treatment process of tempered glass, it is necessary to use an air cooling device to perform tempered glass cooling. The existing devices utilizing air for tempered glass cooling mainly consists of a compressed air supply unit, an air duct and an air nozzle located on the air duct, wherein the compressed air supply unit is used for supplying high-pressure cold air to the air duct. The air nozzle is used for giving out cold air to the glasses that are to be processed, thereby performing tempered glass cooling. In the existing air cooling devices, the air nozzles are usually circular holes. These air nozzles' performance has the disadvantage of uneven distribution of air pressure. The glass surface is susceptible to stress marks. To solve this problem, the Chinese granted utility model publication No.CN2608497Y discloses a "slit-type air gate nozzle". This nozzle is configured as a slit type so that the air outflow is concentrated. The occurrence of uneven distribution of air pressure is avoided. The stress distribution of glasses is more uniform and reasonable. However, the following deficiencies still exist in this slit-type air gate nozzle: Since each air nozzle only includes one slit, each air nozzle can only form one wind band on glasses. Also, the wind bands are independent of each other. They cannot be connected together. If you want to link up the wind bands formed in each slit, it is necessary to configure closely arranged air nozzles, making the structure complicated. Another Chinese granted utility model publication No. CN203960044U discloses a tempered glass air-cooling nozzle and an air duct comprising the same. However, a detailed piping arrangement of how air is supplied to air ducts and ejects out of the nozzles in a multiple air ducts application are not disclosed by this Chinese utility model.

### Disclosure of the Invention

For the purpose of overcoming the deficiencies in the prior art, the present invention provides a device utilizing air for tempered glass cooling. In this device utilizing air for tempered glass cooling, two wind bands can be formed on each air nozzle. The air cooling effect is good, and the wind bands between adjacent air nozzles can be closely arranged.

The technical scheme of the present invention for solving the above technical problem is as follows:
A device utilizing air for tempered glass cooling comprises a compressed air supply unit, air ducts which connect with the compressed air supply unit and air nozzles located on the air ducts, wherein each of the air nozzles comprises a housing body and an embedded body located in the housing body, wherein the housing body interior is provided with an inner cavity for mounting the embedded body, a tapered air guiding passage gradually widening outward is formed between an external wall of the embedded body and an inner cavity surface; a distal end of the tapered air guiding passage forms two arc-shaped air outlets opposing each other; a partition is arranged between opposite ends of the two arc-shaped air outlets for separating the two arc-shaped air outlets;
each of the air ducts (12) comprises a high-pressure air duct (5) located at an inner side and a low-pressure air duct (6) located at an outer side; a center of an air-outflow end face of each air duct (12) is provided with a plurality of said air nozzles (15) arranged along a longitudinal direction of the air duct (12); the air nozzles (15) are in communication with an internal passage (5-1) of the high-pressure air duct (5); the two arc-shaped air outlets (4) of each air nozzle (15) are arranged along a direction that is perpendicular to the longitudinal direction of the air duct (12); both sides of the air nozzle (15) are respectively provided with a plurality of air exits (6-2) arranged along the longitudinal direction of the air duct, the air exits (6-2) are in communication with an internal passage (6-1) of the low-pressure air duct (6);
the compressed air supply unit comprises a high-pressure air supply device (13) and a low-pressure air supply device (14), the high-pressure air supply device (13)is connected to the internal passage (5-1) of each high-pressure air duct (5)through air supply lines; the high-pressure air supply device (13) comprises an air compressor, an air storage tank, an air purification can and the air supply lines; the high-pressure air supply device (13) is used for supplying high-pressure air into each high-pressure air duct (5);
the low-pressure air supply device (14) is connected to the internal passage (6-1)of each low-pressure air duct (6) through an air supply line; the low-pressure air supply device (14) comprises an air blower, an air box, an air purification can and the air supply line; the low-pressure air supply device (14) is used for supplying low-pressure air to each low-pressure air duct (6); wherein
the air supply lines of the high-pressure air supply device (13) comprises a first high-pressure air supply line (131) and a second high-pressure air supply line (132) connected in series; each of the high-pressure air supply line (131) and the second high-pressure air supply line (132) comprises a plurality of high-pressure air supply branches (1311) connected in series; the high-pressure air supply branches (1311) of the first high-pressure air supply line (131) are each connected respectively with one end of the high-pressure air duct (5) of each air duct (12); the high-pressure air supply branches (1311) of the second high-pressure air supply line (132) are each connected respectively with another end of the high-pressure air duct (5) of each air duct (12), so that high-pressure air enters the internal passage (5-1) of each high-pressure air duct (5) from both ends of each air duct (12);
the air supply line of the low-pressure air supply device (14) is a low-pressure air supply line (141); the low-pressure air supply line (141) comprises a plurality of low-pressure air supply branches (1411) connected in series: the low-pressure air supply branches (1411) of the low-pressure air supply line (141) are each connected respectively with one end or the low-pressure air duct (6) of each air duct (12), so that low-pressure air enters the internal passage (6-1) of each low-pressure air duct (6) from one end of each air duct (12).

In a preferred embodiment of the device utilizing air for tempered glass cooling, the inner cavity of the housing body is formed by an air inlet section, an air guiding section and an air outlet section connected in sequence. The embedded body is formed by connecting a tapered body and a separating body, wherein the tapered body matches with and fits inside the air guiding section; a space between an external wall of the tapered body and an air guiding section surface forms the tapered air guiding passage; a radial dimension of the air outlet section is bigger than the largest diameter of the air guiding section; the separating body matches with and fits on a top part of the air outlet section; the separating body forms the partition.

In the above structure, matching between the separating body and the air outlet section achieves positioning function, so that the embedded body simply needs to be mounted into the inner cavity of the housing body, and then the tapered air guiding passage can be formed; also, the separating body forms the partition, thereby separating an exit of the tapered air guiding passage into the two arc-shaped air outlets, so that the separating body does not only serve a positioning function but also a separating function.

In a preferred embodiment of the device utilizing air for tempered glass cooling, a cross section of the air outlet section has a circular shape; outer side surfaces of the separating body are circular arc surfaces which match with the circular cross section of the air outlet section. This is advantageous to the matching and positioning between the separating body and the air outlet section.

In a preferred embodiment of the device utilizing air for tempered glass cooling, the tapered air guiding passage has the same cross sectional area at any of its cross sections. The purpose is to ensure stability of air volume and air pressure everywhere within the tapered air guiding passage, thereby ensuring that the air volume and air pressure blowing out from the arc-shaped air outlets are even. To attain this purpose, taper shape of the air guiding section and taper shape of the tapered body are different, wherein a width of the tapered air guiding passage at an end corresponding to a tip of the tapered body is wider. The width at another end of the tapered air guiding passage is narrower. A middle section between said end and said anther end of the tapered air guiding passage is a gradational transition between the wider width at said end and the narrower end at said another end. Thus, it is ensured that the tapered air guiding passage has the same cross sectional area in any of its cross sections.

In a preferred embodiment of the device utilizing air for tempered glass cooling, a taper of the air guiding section is 30-120 degrees; a taper of the tapered body is 35-150 degrees. The advantage of using these preferred parameters is that uniform pressure and uniform speed are achieved with minimal resistance before the air reaches the air outlet.

In a preferred embodiment of the device utilizing air for tempered glass cooling, a cross section of the air inlet section is in a circular shape; the tip of the tapered body projects into the air inlet section; the tip of the tapered body is made into a round head; a center of the tip coincides with a center line of the air inlet section. This allows the air entering the air inlet section to be evenly distributed to the tapered air guiding passage, ensuring the stability of air volume and air pressure everywhere within the tapered air guiding passage.

In a preferred embodiment of the device utilizing air for tempered glass cooling, a shape that the two arc-shaped air outlets of each air nozzle project onto a glass surface along an air-outflow direction is in a bracket shape (i.e. " () " shape); a plurality of " () " shapes projected by a plurality of air nozzles are connected in sequence, this can form a continuous cooling wind band enhancing the cooling effect.

In a preferred embodiment of the device utilizing air for tempered glass cooling, the high-pressure air duct and the low-pressure air duct connect with each other at a side wall corresponding to the air-outflow end face. A middle of the air-outflow end face is a horizontal section. The air nozzles are provided on the horizontal section; two sides of the middle of the air-outflow end face are sloping sections respectively, the air exits are provided on the sloping sections. This preferred embodiment has the beneficial effect of mixing air and compressed air for air supply.

The working principle of the device utilizing air for tempered glass cooling is as follows: the compressed air supply unit supplies compressed air to the air ducts. The compressed air in each air duct enters into the air nozzles. Guided by the tapered air guiding passage of each of the air nozzles, the compressed air in each air nozzle flows forward in a gradually widening angle, and is divided into two streams of air outflow flowing out from the two arc-shaped air outlets respectively under the separation effect of the partition, thereby forming two arc-shaped wind bands with uniform pressure and uniform speed hitting against the glass to be rapidly cooled for uniform cooling of the glass surface.

Compared with the prior art, the device utilizing air for tempered glass cooling according to the present invention has the following beneficial effects:
1. As each air nozzle of the device can form two wind bands with uniform pressure and uniform speed, the glass moving through the cooling sections corresponding to the air nozzles is subject to uniform cooling and tempering of the surface twice, thereby largely enhancing the tempering strength and its uniformity. Wind marks are reduced effectively.
2. In between the two wind bands formed by each air nozzle, a windless band exists between the opposite ends of the two wind bands due to separation by the partition. The windless band is a low pressure area, and thus forming an airstream outflow passage, thereby quickly bringing away the heat in the area enclosed by the two wind bands; also, after the airstreams of the two wind bands hit against the glass, air flow in the area enclosed by the two wind bands will rebound first, and then being mixed, and eventually flow out to low pressure areas at both sides. During the outflow process, the airstreams of the two wind bands will further be mixed, thereby conducting sufficient heat exchange with the glass. The cooling efficiency is greatly enhanced.
3. In each air nozzle, as the tapered air guiding passage has a guiding function, airstreams from the arc-shaped air outlets will hit against the glass in an angle that corresponds to the tapered passage of the tapered air guiding passage. In other words, the projection of wind bands on the glass (i.e. the area where the glass is hit by the wind bands) may deviate from the area the air nozzle directly faces, so that the projection of two adjacent air nozzles on the glass can be closely connected together, thereby ensuring that all parts of the glass passing beneath the air nozzle is subject to uniform cooling.

### Brief Description of Drawings

FIGS. 1 and 2 are structural schematic views showing a specific embodiment of the device utilizing air for tempered glass cooling according to the present invention, wherein FIG. 1 is a front view (only the air ducts and the glass to be processed are shown) and FIG. 2 is a bottom view (the air ducts and the compressed air supply unit are shown).
FIGS. 3 to 5 are structural schematic views showing an air nozzle according to a specific embodiment of the device utilizing air for tempered glass cooling of the present invention, wherein FIG. 3 is a front view (sectional view), FIG. 4 is a top view and FIG. 5 is an A-A sectional view of FIG. 3.
FIGS. 6 and 7 are structural schematic views of the housing body shown in FIG. 3, wherein FIG. 6 is a front view (sectional view) and FIG. 7 is a top view.
FIGS. 8 to 10 are structural schematic views of the embedded body shown in FIG. 3, wherein FIG. 8 is a front view (sectional view), FIG. 9 is a left view and FIG. 10 is a top view.
FIGS. 11 to 13 are structural schematic views showing implementation of the air ducts according to a specific embodiment of the device utilizing air for tempered glass cooling of the present invention, wherein FIG. 11 is a front view, FIG. 12 is a left view (sectional view) and FIG. 13 is a top view.
FIG. 14 is an enlarged view of the "I" region in FIG. 12.
FIG. 15 is a structural schematic view after the structure shown in FIG. 14 is mounted with the embedded body.
FIG. 16 is a schematic view of the wind bands formed on the glass by the air ducts.

The present invention will be further described in detail below in conjunction with the accompanying drawings and embodiments, but the implementation of the present invention is not limited thereto.

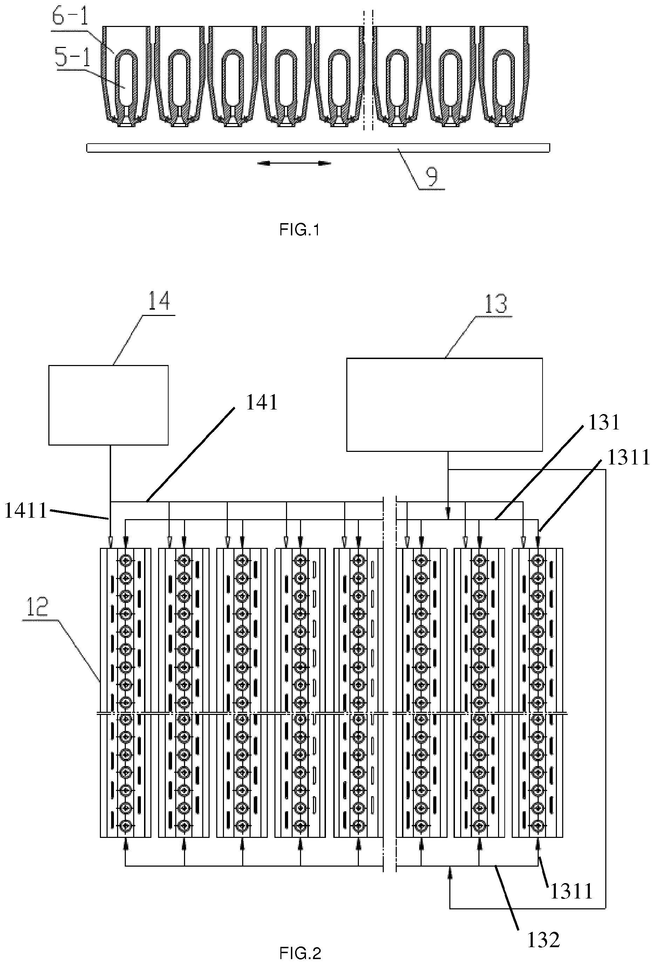

With reference to FIGS. 1 and 2, the device utilizing air for tempered glass cooling of the present invention comprises a compressed air supply unit, air ducts 12 connecting to the compressed air supply unit, and air nozzles 15 located on the air ducts 12.

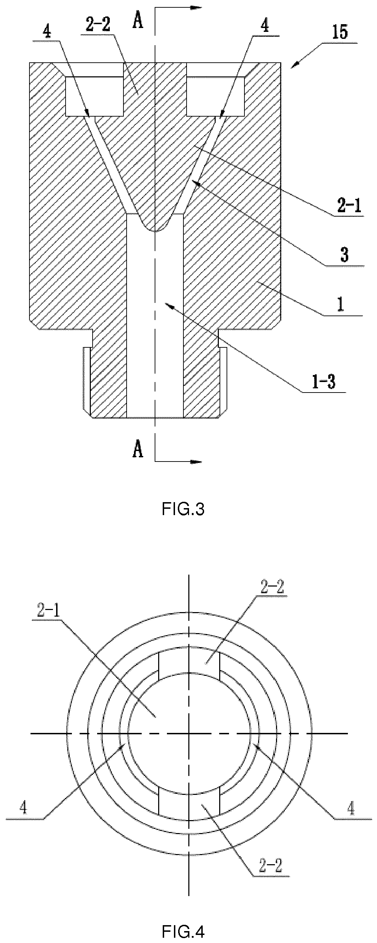

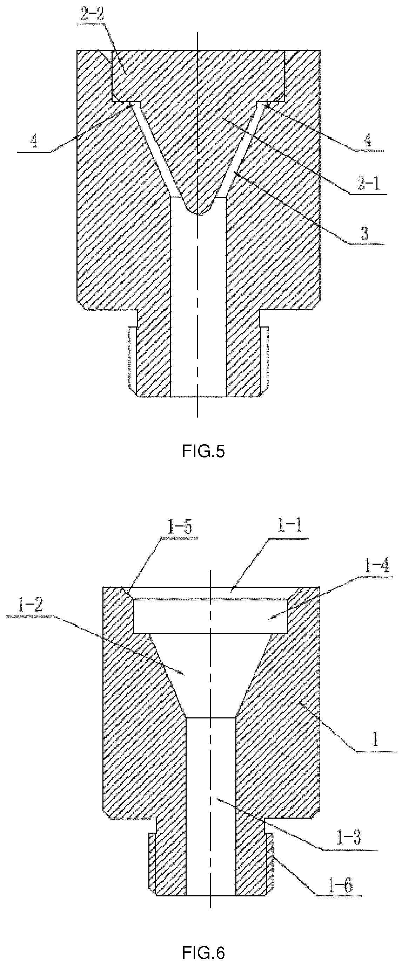

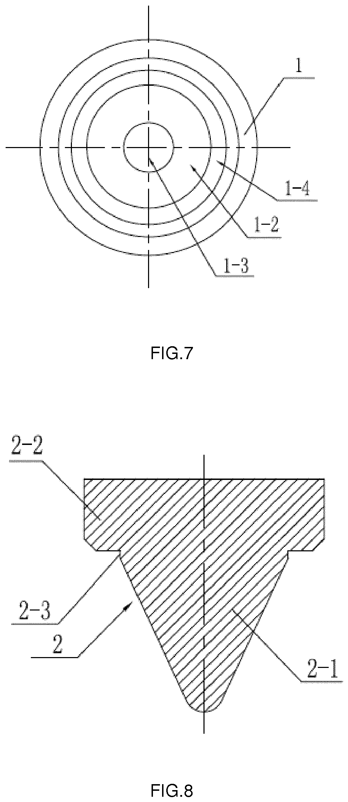

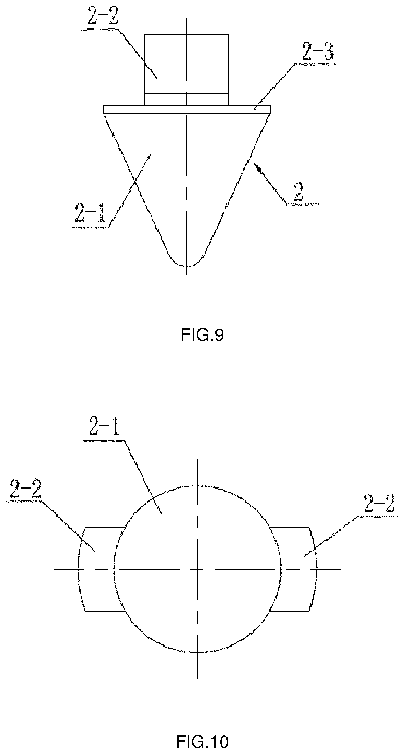

With reference to FIGS. 3 to 9, each of the air nozzles 15 comprises a housing body 1 and an embedded body 2 located in the housing body 1, wherein an inner cavity 1-1 for mounting the embedded body 2 is provided inside the housing body 1, a tapered air guiding passage 3 gradually widening outward is formed between an external wall of the embedded body 2 and the inner cavity 1-1 surface. Two arc-shaped air outlets 4 opposing each other are formed at a distal end of the tapered air guiding passage 3. A partition is arranged between opposing ends of the two arc-shaped air outlets 4 for separating the two arc-shaped air outlets 4.

With reference to FIGS. 3 to 9, the inner cavity 1-1 of the housing body 1 is formed by an air inlet section 1-3, an air guiding section 1-2 and an air outlet section 1-4 sequentially connected to one another, wherein a cross section of the air inlet section 1-3 is circular. The air guiding section 1-2 is tapered. A cross section of the air outlet section 1-4 is also circular. The radial dimension of the air outlet section 1-4 is bigger than the longest diameter of the air guiding section 1-2; connection threads 1-6 are provided at one end of the housing body 1 corresponding to the air inlet section 1-3, the connection threads 1-6 are used for connecting the air nozzle 15 onto a respective air duct 23. The embedded body 2 is formed by connecting a tapered body 2-1 and a separating body 2-2, wherein the tapered body 2-1 matches with and fitted inside the air guiding section 1-2. A space between the external wall of the tapered body 2-1 and the air guiding section 1-2 surface forms the tapered air guiding passage 3. The separating body 2-2 matches with and fitted within the air outlet section 1-4. The separating body 2-2 spans across a top surface of the tapered body 2-1. The outer side surfaces of the separating body 2-2 are circular arc surfaces which matches with the wall surface of the air outlet section 1-4, and a bottom surface of the separating body 2-2 is attached to a bottom surface of the air outlet section 1-4; by matching the separating body 2-2 and the air outlet section 1-4, a positioning function is achieved, so that the embedded body 2 simply needs to be mounted into the inner cavity 1-1 of the housing body 1, and then the tapered air guiding passage 3 can be formed; also, the separating body 2-2 forms the partition, thereby separating the exit of the tapered air guiding passage 3 into two arc-shaped air outlets 4, so that this separating body 2-2 does not only serve a positioning function but also a separating function. In order not to block the flow of airstreams flowing out from the arc-shaped air outlets 4, an edge of a top part of the air outlet section 1-4 is provided with a chamfer 1-5.

With reference to FIGS. 3 to 5, the tapered air guiding passage 3 has the same cross sectional area in any of its cross sections. The purpose is to ensure the stability of air volume and air pressure everywhere within the tapered air guiding passage 3, thereby ensuring that the air volume and air pressure blowing from the arc-shaped air outlets 4 are even. To attain this purpose, the taper shape of the air guiding section 1-2 and the taper shape of the tapered body 2-1 are different, wherein the width of the tapered air guiding passage 3 at the end corresponding to the tip of the tapered body 2-1 is wider. The width at another end is narrower. The middle section is a gradational transition between the wider width at said end and the narrower end at said another end. Thus, it is ensured that the tapered air guiding passage 3 has the same cross sectional area in any of its cross sections; specifically, the taper of the air guiding section 1-2 is 47 degrees; the taper of the tapered body 2-1 is 50 degrees.

With reference to FIGS. 3 to 5 and FIGS 8 to 10, the tapered body 2-1 is provided with a cylindrical section 2-3 in the part connecting with the separating body 2-2. The cylindrical section 2-3 is provided so that the dimension of the largest diameter section of the cylindrical section 2-3 can be measured. To ensure that the tapered air guiding passage 3 has the same cross sectional area at any of its cross sections, it is necessary to determine the dimension of the largest diameter section of the cylindrical section 2-3. Without the cylindrical section 2-3, it is not easy to measure. Usually the length of this cylindrical section 2-3 is set to be about 0.3mm. Since this length is small, it has no impact on wind direction.

With reference to FIGS. 3 to 5, the tip of the tapered body 2-1 projects into the air inlet section 1-3; this tip of the tapered body 2-1 is made into a round head; a center of this tip coincides with a center line of the air inlet section 1-3. This allows the air entering the air inlet section 1-3 to be evenly distributed to the tapered air guiding passage 3, ensuring the stability of air volume and air pressure everywhere within the tapered air guiding passage 3.

With reference to FIGS. 1, 2 and FIGS. 11 to 15, each of the air ducts 12 comprises a high-pressure air duct 5 located at an inner side and a low-pressure air duct 6 located at an outer side. A center of an air-outflow end face of each air duct 12 is provided with a plurality of said air nozzles 15 arranged along a longitudinal direction of the air duct 12. The air nozzles 15 is in communication with an internal passage 5-1 of the high-pressure air duct 5. The two arc-shaped air outlets 4 of each air nozzle 15 are arranged along a direction that is perpendicular to the longitudinal direction of the air duct 12; both sides of the air nozzle 15 are respectively provided with a plurality of air exits 6-2 arranged along the longitudinal direction of the air duct 12, the air exits 6-2 are in communication with the internal passage 6-1 of the low-pressure air duct 6. The compressed air supply unit comprises a high-pressure air supply device 13 and a low-pressure air supply device 14, wherein the high-pressure air supply device 13 is connected to the internal passage 5-1 of each high-pressure air duct 5 through air supply lines. The high-pressure air supply device 13 comprises components such as an air compressor, an air storage tank, an air purification can and the air supply lines, the high-pressure air supply device 13 is used for supplying high-pressure air into each high-pressure air duct 5. Specifically, the air supply lines of the high-pressure air supply device 13 comprises a first high-pressure air supply line 131 and a second high-pressure air supply line 132 connected in series: each of the high-pressure air supply line 131 and the second high-pressure air supply line 132 comprises a plurality of high-pressure air supply branches 1311 connected in series; the high-pressure air supply branches 1311 of the first high-pressure air supply line 131 are each connected respectively with one end of the high-pressure air duct 5 of each air duct 12; the high-pressure air supply branches 1311 of the second high-pressure air supply line 132 are each connected respectively with another end of the high-pressure air duct 5 of each air duct 12. Therefore, the high-pressure air enters the internal passage 5-1 of each high-pressure air duct 5 from both ends of a corresponding air duct 12; the low-pressure air supply device 14 is connected to the internal passage 6-1 of each low-pressure air duct 6 through an air supply line. The low-pressure air supply device 14 comprises components such as an air blower, an air box, an air purification can and the air supply line, the low-pressure air supply device 14 is used for supplying low-pressure air to each low-pressure air duct 6. Specifically, the air supply line is a low-pressure air supply line 141; the low-pressure air supply line comprises a plurality of low-pressure air supply branches 1411 connected in series; the low-pressure air supply branches 1411 of the low-pressure air supply line 141 are each connected respectively with one end of the low-pressure air duct 6 of each air duct 12. Therefore, the low-pressure air enters the internal passage 6-1 of each low-pressure air duct 6 from one end of each air duct 12. The high-pressure air in the above-mentioned high-pressure air duct 5 has great pressure but small volume when blowing out from the air nozzles 15; the low-pressure air in the low-pressure air duct 6 has small pressure but high volume when blowing out from the air exits 6-2. To achieve a better cooling effect, it is necessary to ensure that the air pressure and air volume are large at the same time when cooling the tempered glass. With the use of the air duct 12 formed by the high-pressure air duct 5 and the low-pressure air duct 6, the above-mentioned requirements can be satisfied.

With reference to FIGS. 1, 2 and 14, the device utilizing air for tempered glass cooling comprises a plurality of air ducts 12. These air ducts 12 are arranged along the movement direction of the tampered glass 9. During operation, the tempered glass 9 is subject to a large amount of high-pressure air sending out from the air nozzles 15 and the low-pressure air sending out from the air exits 6-2 to achieve cooling effect.

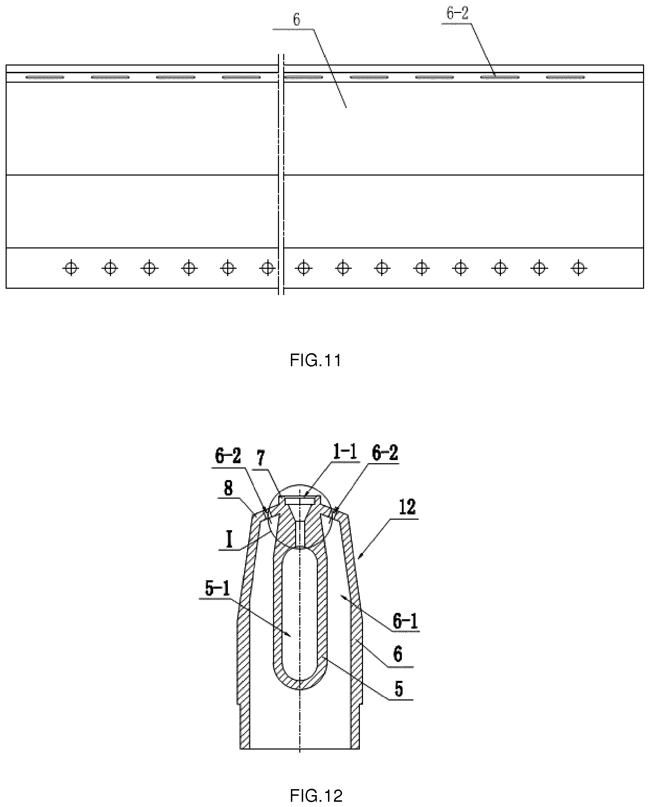

With reference to FIGS. 12 to 15, the high-pressure air duct 5 and the low-pressure air duct 6 connect with each other at a side wall corresponding to the air-outflow end face. A middle of this air-outflow end face is a horizontal section 7. The air nozzles 15 are provided on this horizontal section 7; the two sides of the middle of this air-outflow end face are sloping sections 8 respectively, the air exits 6-2 are provided on the sloping sections 8. The housing body 1 in the air nozzle 15 is partially formed as a one whole piece with the air-outflow end face of the high-pressure air duct 5. In other words, the inner cavity 1-1 of the air nozzle 15 is provided within a wall body of the high-pressure air duct 5 corresponding to the air-outflow end face. The inner cavity 1-1 of the air nozzle 15 communicates with the internal passage 5-1 of the high-pressure air duct 5. The high-pressure air duct 5 and the low-pressure air duct 6 are made by extrusion process. The inner cavity 1-1 is obtained by a numerical control process. The air nozzle 15 configured as above can eliminate the procedures of manufacturing an independent housing body 1 and assembling the housing body 1, thereby saving costs.

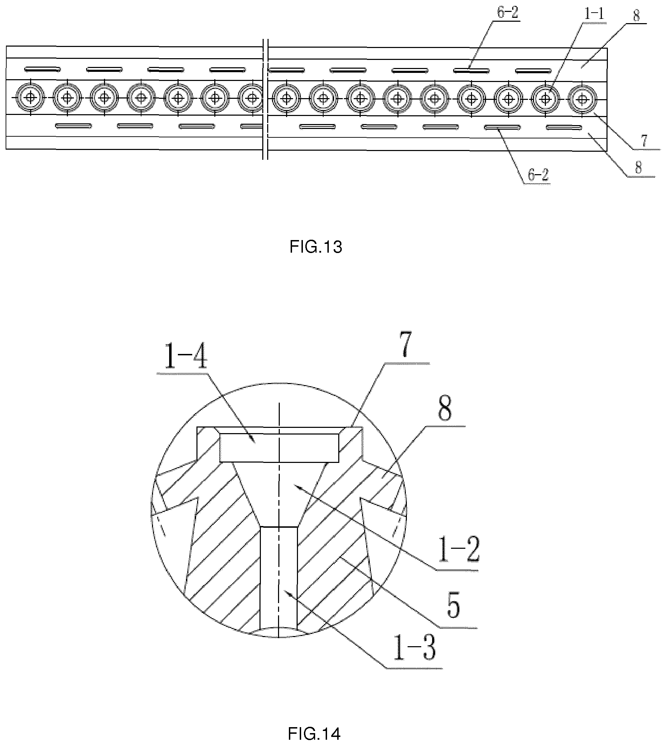

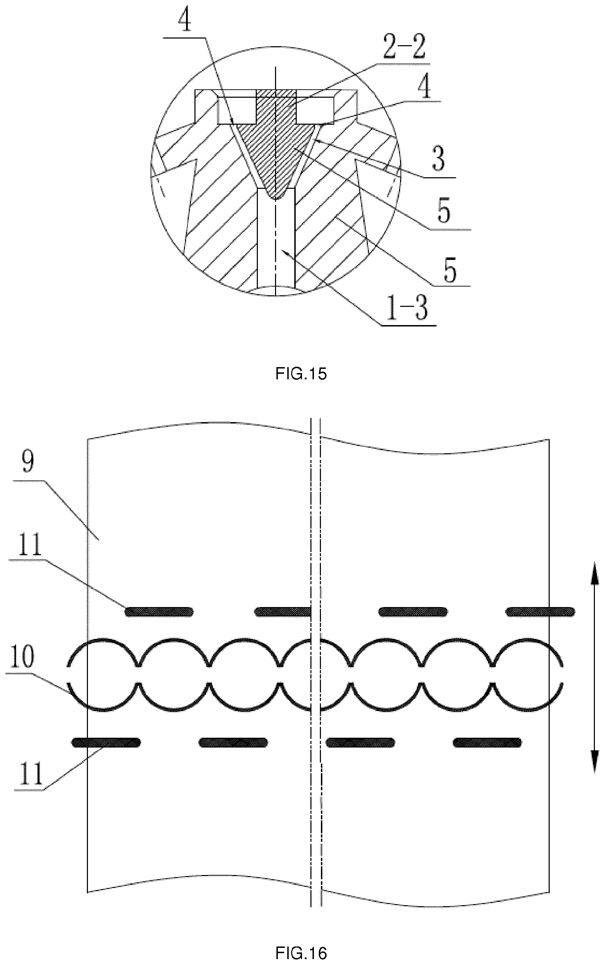

With reference to FIGS. 14 and 15, along an air-outflow direction, a shape that the two arc-shaped air outlets 4 of each air nozzle 15 project onto a glass 9 surface is in a bracket shape (i.e. " () " shape); a plurality of " () " shapes projected by a plurality of air nozzles 15 are connected in sequence, achievable by setting the distance between the air nozzles 15 and the taper of the tapered air guiding section 3. The air exits 6-2 are located on both sides of the air nozzles 15. The air-outflow direction of one row of air exits 6-2 forms an included angle of about about 45° with the air-outflow direction of another row of air exits 6-2. The projections of the shapes of the two rows of air exits 6-2 on the glass 9 surface are located on both sides of the " () " shape projection respectively. In the air duct 12 of the present invention, high-pressure air blows out from the air nozzles 15 at the middle of the air-outflow end face, and low-pressure air blows out from the air exits 6-2 at both sides of the middle of the air-outflow end face. The two types of cooling air can be mixed together or used separately.

The working principle of the device utilizing air for tempered glass cooling according to the present invention is as follows:
With reference to FIGS. 1, 2 and 15, during operation, many air ducts 12 span across the top of the glass 9 along a width direction of the glass 9. The high-pressure air supply device 13 supplies high-pressure air into the internal passage 5-1 of each high-pressure air duct 5 through air supply lines. The low-pressure air supply device 14 supplies low-pressure air into the internal passage 6-1 of each low-pressure air duct 6 through air supply lines; wherein the high-pressure air is blown out from each air nozzle 15. Guided by the tapered air guiding passage 3 of each air nozzle 15, the compressed air flows forward in a gradual widening angle, and is then divided into two streams discharging out from the two arc-shaped air outlets 4 respectively under the separation of the partition, forming two arc-shaped wind bands with uniform pressure and uniform speed that hit against the glass to be rapidly cooled so as to perform uniform cooling of the glass surface. In each air duct 12, the high-pressure air blown out from the air nozzles 15 forms a continuous wind band 10 of high-pressure cooling air; low-pressure air is blown out from the air exits; the low-pressure air blown out from the air exits 6-2 in each air duct 12 forms two wind bands 11 of low-pressure cooling air located at both sides of the wind band 10 of high-pressure cooling air on the glass surface. The glass 9 at high temperature moves back and forth below the air ducts 12 for rapid cooling by the above-mentioned wind band 10 of high-pressure cooling air and wind bands 11 of low-pressure cooling air.

## Claims

1. A device utilizing air for tempered glass cooling, comprising a compressed air supply unit, air ducts (12) which connect with the compressed air supply unit, and air nozzles (15) located on the air ducts (12), wherein
each of the air nozzles (15) comprises a housing body (1) and an embedded body (2) located in the housing body (1), wherein an interior side of the housing body (1) is provided with an inner cavity (1-1) for mounting the embedded body (2), a tapered air guiding passage (3) gradually widening outward is formed between an external wall of the embedded body (2) and an inner cavity surface; a distal end of the tapered air guiding passage (3) forms two arc-shaped air outlets (4) opposing each other; a partition is arranged between opposite ends of the two arc-shaped air outlets (4) for separating the two arc-shaped air outlets;
each of the air ducts (12) comprises a high-pressure air duct (5) located at an inner side and a low-pressure air duct (6) located at an outer side; a center of an air-outflow end face of each air duct (12) is provided with a plurality of said air nozzles (15) arranged along a longitudinal direction of the air duct (12); the air nozzles (15) are in communication with an internal passage (5-1) of the high-pressure air duct (5); the two arc-shaped air outlets (4) of each air nozzle (15) are arranged along a direction that is perpendicular to the longitudinal direction of the air duct (12); both sides of the air nozzle (15) are respectively provided with a plurality of air exits (6-2) arranged along the longitudinal direction of the air duct, the air exits (6-2) are in communication with an internal passage (6-1) of the low-pressure air duct (6);
the compressed air supply unit comprises a high-pressure air supply device (13) and a low-pressure air supply device (14), the high-pressure air supply device (13) is connected to the internal passage (5-1) of each high-pressure air duct (5) through air supply lines; the high-pressure air supply device (13) comprises an air compressor, an air storage tank, an air purification can and the air supply lines; the high-pressure air supply device (13) is used for supplying high-pressure air into each high-pressure air duct (5);
the low-pressure air supply device (14) is connected to the internal passage (6-1) of each low-pressure air duct (6) through an air supply line; the low-pressure air supply device (14) comprises an air blower, an air box, an air purification can and the air supply line; the low-pressure air supply device (14) is used for supplying low-pressure air to each low-pressure air duct (6); wherein
the air supply lines of the high-pressure air supply device (13) comprises a first high-pressure air supply line (131) and a second high-pressure air supply line (132) connected in series; each of the high-pressure air supply line (131) and the second high-pressure air supply line (132) comprises a plurality of high-pressure air supply branches (1311) connected in series; the high-pressure air supply branches (1311) of the first high-pressure air supply line (131) are each connected respectively with one end of the high-pressure air duct (5) of each air duct (12); the high-pressure air supply branches (1311) of the second high-pressure air supply line (132) are each connected respectively with another end of the high-pressure air duct (5) of each air duct (12), so that high-pressure air enters the internal passage (5-1) of each high-pressure air duct (5) from both ends of each air duct (12);
the air supply line of the low-pressure air supply device (14) is a low-pressure air supply line (141); the low-pressure air supply line (141) comprises a plurality of low-pressure air supply branches (1411) connected in series; the low-pressure air supply branches (1411) of the low-pressure air supply line (141) are each connected respectively with one end of the low-pressure air duct (6) of each air duct (12), so that low-pressure air enters the internal passage (6-1) of each low-pressure air duct (6) from one end of each air duct (12).

2. The device utilizing air for tempered glass cooling as in claim 1, wherein the inner cavity (1-1) of the housing body (1) is formed by an air inlet section (1-3), an air guiding section (1-2) and an air outlet section (1-4) connected in sequence; the embedded body (2) is formed by connecting a tapered body (2-1) and a separating body (2-2), wherein the tapered body (2-1) matches with and fits inside the air guiding section (1-2); a space between an external wall of the tapered body (2-1) and an air guiding section surface forms the tapered air guiding passage (3); a radial dimension of the air outlet section (1-4) is bigger than the largest diameter of the air guiding section (1-2); the separating body (2-2) matches with and fits on a top part of the air outlet section (1-4); the separating body (2-2) forms the partition.

3. The device utilizing air for tempered glass cooling as in claim 2, wherein a cross section of the air outlet section (1-4) has a circular shape; outer side surfaces of the separating body (2-2) are circular arc surfaces which match with the circular cross section of the air outlet section (1-4).

4. The device utilizing air for tempered glass cooling as in claim 2, wherein the tapered air guiding passage (3) has a same cross sectional area at any of its cross sections.

5. The device utilizing air for tempered glass cooling as in claim 4, wherein a taper of the air guiding section (1-2) is 30-120 degrees; a taper of the tapered body (2-1) is 35-150 degrees.

6. The device utilizing air for tempered glass cooling as in claim 2, wherein a cross section of the air inlet section (1-3) is in a circular shape; a tip of the tapered body (2-1) projects into the air inlet section (1-3); the tip of the tapered body (2-1) is made into a round head; a center of the tip coincides with a center line of the air inlet section (1-3).

7. The device utilizing air for tempered glass cooling as in claim 1, wherein the housing body in the air nozzle (15) is formed as a one whole piece with the high-pressure air duct (5); an inner cavity of the air nozzle (15) communicates with the internal passage (5-1) of the high-pressure air duct (5).

8. The device utilizing air for tempered glass cooling as in claim 1, wherein a shape that the two arc-shaped air outlets (4) of each air nozzle (15) project onto a glass surface along an air-outflow direction has a shape of a pair of brackets; multiple pairs of brackets projected by a plurality of air nozzles (15) are connected in sequence.

9. The device utilizing air for tempered glass cooling as in claim 1, wherein the high-pressure air duct (5) and the low-pressure air duct (6) connect with each other at a side wall corresponding to the air-outflow end face; a middle of the air-outflow end face is a horizontal section (7); the air nozzles (15) are provided on the horizontal section (7); two sides of the middle of the air-outflow end face are sloping sections (8) respectively, the air exits (6-2) are provided on the sloping sections (8).

## Patentansprüche

1. Gerät, das Luft zur Kühlung von vorgespanntem Glas nutzt, umfassend eine Druckluftzufuhreinheit, Luftkanäle (12), die mit der Druckluftzufuhreinheit verbunden sind, und Luftdüsen (15), die sich an den Luftkanälen (12) befinden, wobei jede der Luftdüsen (15) einen Gehäusekörper (1) und einen eingebetteten Körper (2) umfasst, der sich im Gehäusekörper (1) befindet, wobei eine Innenseite des Gehäusekörpers (1) mit einem inneren Hohlraum (1-1) zum Anbringen des eingebetteten Körpers (2) versehen ist, wobei ein sich verjüngender Luftführungsdurchgang (3), der sich allmählich nach außen erweitert, zwischen einer Außenwand des eingebetteten Körpers (2) und einer inneren Hohlraumfläche ausgebildet ist; wobei ein distales Ende des sich verjüngenden Luftführungsdurchgangs (3) zwei bogenförmige Luftauslässe (4) ausbildet, die einander gegenüberliegen; wobei eine Abteilung zwischen gegenüberliegenden Enden der zwei bogenförmigen Luftauslässe (4) zum Trennen der zwei bogenförmigen Luftauslässe angeordnet ist;
wobei jeder der Luftkanäle (12) einen Hochdruckluftkanal (5), der sich auf einer Innenseite befindet, und einen Niederdruckluftkanal (6) umfasst, der sich auf einer Außenseite befindet; wobei ein Zentrum einer Luftausströmungsendseite von jedem Kanal (12) mit mehreren der Luftdüsen (15) versehen ist, die entlang einer Längsrichtung des Luftkanals (12) angeordnet sind; wobei die Luftdüsen (15) mit einem inneren Durchgang (5-1) des Hochdruckluftkanals (5) in Verbindung stehen; wobei die zwei bogenförmigen Luftauslässe (4) jeder Luftdüse (15) entlang einer Richtung angeordnet sind, die senkrecht zur Längsrichtung des Luftkanals (12) verläuft; wobei beide Seiten der Luftdüse (15) jeweils mit mehreren Luftaustritten (6-2) versehen sind, die entlang der Längsrichtung des Luftkanals angeordnet sind, wobei die Luftaustritte (6-2) mit einem inneren Durchgang (6-1) des Niederdruckluftkanals (6) in Verbindung stehen;
wobei die Druckluftzufuhreinheit ein Hochdruckluftzufuhrgerät (13) und ein Niederdruckluftzufuhrgerät (14) umfasst, wobei das Hochdruckluftzufuhrgerät (13) über Luftzufuhrleitungen mit dem inneren Durchgang (5-1) von jedem Hochdruckluftkanal (13) verbunden ist; wobei das Hochdruckluftzufuhrgerät (13) einen Luftverdichter, einen Luftspeichertank, eine Luftreinigungsbüchse und die Luftzufuhrleitungen umfasst; wobei das Hochdruckluftzufuhrgerät (13) zum Zuführen von Hochdruckluft in jeden Hochdruckluftkanal (5) benutzt wird; wobei das Niederdruckluftzufuhrgerät (14) über eine Luftzufuhrleitung mit dem inneren Durchgang (6-1) von jedem Niederdruckluftkanal (6) verbunden ist; wobei das Niederdruckluftzufuhrgerät (14) ein Luftgebläse, einen Luftkasten, eine Luftreinigungsbüchse und die Luftzufuhrleitung umfasst; wobei das Niederdruckluftzufuhrgerät (14) zum Zuführen von Niederdruckluft zu jedem Niederdruckluftkanal (6) benutzt wird;
wobei die Luftzufuhrleitungen des Hochdruckluftzufuhrgeräts (13) eine erste Hochdruckluftzufuhrleitung (131) und eine zweite Hochdruckluftzufuhrleitung (132) umfassen, die in Reihe verbunden sind; wobei jede der Hochdruckluftzufuhrleitung (131) und der zweiten Hochdruckluftzufuhrleitung (132) mehrere Hochdruckluftzufuhrverzweigungen (1311) umfasst, die in Reihe verbunden sind; wobei die Hochdruckluftzufuhrverzweigungen (1311) der ersten Hochdruckluftzufuhrleitung (131) jede mit jeweils einem Ende des Hochdruckluftkanals (5) von jedem Luftkanal (12) verbunden sind; wobei die Hochdruckluftzufuhrverzweigungen (1311) der zweiten Hochdruckluftzufuhrleitung (132) jede mit jeweils einem anderen Ende des Hochdruckluftkanals (5) von jedem Luftkanal (12) verbunden sind, sodass Hochdruckluft von beiden Enden von jedem Luftkanal (12) in den inneren Durchgang (5-1) von jedem Hochdruckluftkanal (5) eindringt;
wobei die Luftzufuhrleitung des Niederdruckluftzufuhrgeräts (14) eine Niederdruckluftzufuhrleitung (141) ist; wobei die Niederdruckluftzufuhrleitung (141) mehrere Niederdruckluftzufuhrverzweigungen (1411) umfasst, die in Reihe verbunden sind; wobei die Niederdruckluftzufuhrverzweigungen (1411) der Niederdruckluftzufuhrleitung (141) jede mit jeweils einem Ende des Niederdruckluftkanals (6) von jedem Luftkanal (12) verbunden sind, sodass Niederdruckluft von einem Ende von jedem Luftkanal (12) in den inneren Durchgang (6-1) von jedem Niederdruckluftkanal (6) eindringt.

2. Gerät, das Luft zur Kühlung von vorgespanntem Glas nutzt, nach Anspruch 1, wobei der innere Hohlraum (1-1) des Gehäusekörpers (1) durch eine Lufteinlasssektion (1-3), eine Luftführungssektion (1-2) und eine Luftauslasssektion (1-4) ausgebildet ist, die in Reihe verbunden sind; wobei der eingebettete Körper (2) durch Verbinden eines sich verjüngenden Körpers (2-1) und eines Trennkörpers (2-2) ausgebildet ist; wobei der sich verjüngende Körper (2-1) mit der Luftführungssektion (1-2) zusammenpasst und dort hineinpasst; wobei ein Raum zwischen einer Außenwand des sich verjüngenden Körpers (2-1) und einer Luftführungssek tionsfläche den sich verjüngenden Luftführungsdurchgang (3) ausbildet; wobei eine radiale Abmessung der Luftauslasssektion (1-4) größer als der größte Durchmesser der Luftführungssektion (1-2) ist; wobei der Trennkörper (2-2) mit der Luftauslasssektion (1-4) zusammenpasst und auf ein oberes Teil davon passt; wobei der Trennkörper (2-2) die Abteilung ausbildet.

3. Gerät, das Luft zur Kühlung von vorgespanntem Glas nutzt, nach Anspruch 2, wobei ein Querschnitt der Luftauslasssektion (1-4) eine Kreisform aufweist; wobei Außenseitenflächen des Trennkörpers (2-2) Kreisbogenflächen sind, die mit dem kreisförmigen Querschnitt der Luftauslasssektion (1-4) zusammenpassen.

4. Gerät, das Luft zur Kühlung von vorgespanntem Glas nutzt, nach Anspruch 2, wobei der sich verjüngende Luftführungsdurchgang (3) dieselbe Querschnittsfläche wie jeglicher seiner Querschnitte aufweist.

5. Gerät, das Luft zur Kühlung von vorgespanntem Glas nutzt, nach Anspruch 4, wobei eine Verjüngung der Luftführungssektion (1-2) 30 bis 120 Grad beträgt; wobei eine Verjüngung des sich verjüngenden Körpers (2-1) 35 bis 150 Grad beträgt.

6. Gerät, das Luft zur Kühlung von vorgespanntem Glas nutzt, nach Anspruch 2, wobei ein Querschnitt der Lufteinlasssektion (1-3) eine Kreisform ist; wobei eine Spitze des sich verjüngenden Körpers (2-1) in die Lufteinlasssektion (1-3) vorsteht; wobei die Spitze des sich verjüngenden Körpers (2-1) zu einem runden Kopf hergestellt ist; wobei eine Mitte der Spitze mit einer Mittellinie der Lufteinlasssektion (1-3) zusammenfällt.

7. Gerät, das Luft zur Kühlung von vorgespanntem Glas nutzt, nach Anspruch 1, wobei der Gehäusekörper in der Luftdüse (15) einstückig mit dem Hochdruckluftkanal (5) ausgebildet ist; wobei ein innerer Hohlraum der Luftdüse (15) mit dem inneren Durchgang (5-1) des Hochdruckluftkanals (5) in Verbindung steht.

8. Gerät, das Luft zur Kühlung von vorgespanntem Glas nutzt, nach Anspruch 1, wobei eine Form, die die zwei bogenförmigen Luftauslässe (4) jeder Luftdüse (15) auf eine Glasfläche entlang einer Luftausströmungsrichtung projizieren, eine Form eines Paars von Klammern aufweist; wobei mehrere Paare von Klammern, die durch mehrere Luftdüsen (15) projiziert werden, in Reihe verbunden sind.

9. Gerät, das Luft zur Kühlung von vorgespanntem Glas nutzt, nach Anspruch 1, wobei sich der Hochdruckluftkanal (5) und der Niederdruckluftkanal (6) an einer Seitenwand miteinander verbinden, die der Luftausströmungsendseite entspricht; wobei eine Mitte der Luftausströmungsendseite eine horizontale Sektion (7) ist; wobei die Luftdüsen (15) an der horizontalen Sektion (7) vorgesehen sind; wobei zwei Seiten der Mitte der Luftausströmungsendseite jeweils sich neigende Sektionen (8) sind, wobei die Luftaustritte (6-2) an den sich neigenden Sektionen (8) vorgesehen sind.

## Revendications

1. Dispositif utilisant de l'air pour refroidir un verre trempé, comprenant une unité d'alimentation d'air comprimé, des conduites d'air (12) qui sont reliées à l'unité d'alimentation d'air comprimé, et des buses d'air (15) situées sur les conduites d'air (12), dans lequel
chacune des buses d'air (15) comprend un corps de boîtier (1) et un corps incorporé (2) situé dans le corps de boîtier (1), dans lequel un côté intérieur du corps de boîtier (1) est muni d'une cavité interne (1-1) pour monter le corps incorporé (2), un passage de guidage d'air fuselé (3) s'élargissant progressivement vers l'extérieur est formé entre une paroi externe du corps incorporé (2) et une surface de cavité interne ; une extrémité distale du passage de guidage d'air fuselé (3) forme deux sorties d'air en forme d'arc (4) opposées l'une à l'autre ; une cloison est disposée entre les extrémités opposées des deux sorties d'air en forme d'arc (4) pour séparer les deux sorties d'air en forme d'arc ;
chacune des conduites d'air (12) comprend une conduite d'air à haute pression (5) située au niveau d'un côté intérieur et une conduite d'air à basse pression (6) située au niveau d'un côté extérieur ; un centre d'une face d'extrémité d'échappement d'air de chaque conduite d'air (12) est fourni avec une pluralité desdites buses d'air (15) agencées le long d'une direction longitudinale de la conduite d'air (12) ; les buses d'air (15) sont en communication avec un passage interne (5-1) de la conduite d'air à haute pression (5) ; les deux sorties d'air en forme d'arc (4) de chaque buse d'air (15) sont agencées le long d'une direction qui est perpendiculaire à la direction longitudinale de la conduite d'air (12) ; les deux côtés de la buse d'air (15) sont respectivement munis d'une pluralité de sorties d'air (6-2) agencées le long de la direction longitudinale de la conduite d'air, les sorties d'air (6-2) sont en communication avec un passage interne (6-1) de la conduite d'air à basse pression (6) ;
l'unité d'alimentation d'air comprimé comprend un dispositif d'alimentation d'air à haute pression (13) et un dispositif d'alimentation d'air à basse pression (14), le dispositif d'alimentation d'air à haute pression (13) est relié au passage interne (5-1) de chaque conduite d'air à pression élevée (5) par l'intermédiaire des lignes d'alimentation d'air ; le dispositif d'alimentation d'air à haute pression (13) comprend un compresseur d'air, une cuve de stockage d'air, une boîte de purification d'air et des lignes d'alimentation d'air ; le dispositif d'alimentation d'air à haute pression (13) est utilisé pour alimenter de l'air à haute pression dans chaque conduite d'air à haute pression (5) ;
le dispositif d'alimentation d'air à basse pression (14) est relié au passage interne (6-1) de chaque conduite d'air à haute pression (6) par l'intermédiaire d'une ligne d'alimentation d'air ; le dispositif d'alimentation d'air à basse pression (14) comprend une souffleuse d'air, une boîte à vent, une boîte de purification d'air et la ligne d'alimentation d'air ; le dispositif d'alimentation d'air à basse pression (14) est utilisé pour alimenter de l'air à basse pression vers chaque conduite d'air à basse pression (6) ;
dans lequel
les lignes d'alimentation d'air du dispositif d'alimentation d'air à haute pression (13) comprennent une première ligne d'alimentation d'air à haute pression (131) et une seconde ligne d'alimentation d'air à haute pression (132) reliées en série ; chacune de la ligne d'alimentation d'air à haute pression (131) et de la seconde ligne d'alimentation d'air à haute pression (132) comprend une pluralité de branches d'alimentation d'air à haute pression (1311) reliées en série ; les branches d'alimentation d'air à haute pression (1311) de la première ligne d'alimentation d'air à haute pression (131) sont chacune reliées respectivement à une extrémité de la conduite d'air à haute pression (5) de chaque conduite d'air (12) ; les branches d'alimentation d'air à haute pression (1311) de la seconde ligne d'alimentation d'air à haute pression (132) sont chacune reliées respectivement à une autre extrémité de la conduite d'air à haute pression (5) de chaque conduite d'air (12), de sorte que l'air à haute pression entre dans le passage interne (5-1) de chaque conduite d'air à haute pression (5) à partir des deux extrémités de chaque conduite d'air (12) ;
la ligne d'alimentation d'air du dispositif d'alimentation d'air à basse pression (14) est une ligne d'alimentation d'air à basse pression (141) ; la ligne d'alimentation d'air à basse pression (141) comprend une pluralité de branches d'alimentation d'air à basse pression (1311) reliées en série ; les branches d'alimentation d'air à basse pression (1411) de la ligne d'alimentation d'air à basse pression (141) sont chacune reliées respectivement à une extrémité de la conduite d'air à basse pression (6) de chaque conduite d'air (12), de sorte que l'air à basse pression entre dans le passage interne (6-1) de chaque conduite d'air à basse pression (6) à partir d'une extrémité de chaque conduite d'air (12).

2. Dispositif utilisant de l'air pour refroidir un verre trempé selon la revendication 1, dans lequel la cavité interne (1-1) du corps de boitier (1) est formée par une section d'entrée d'air (1-3), une section de guidage d'air (1-2) et une section de sortie d'air (1-4) reliées séquentiellement ; le corps incorporé (2) est formé en reliant un corps fuselé (2-1) et un corps de séparation (2-2), dans lequel le corps fuselé (2-1) correspond à et s'intègre dans une section de guidage d'air (1-2) ; un espace entre une paroi externe du corps fuselé (2-1) et une surface de la section de guidage d'air forme le passage de guidage d'air fuselé (3) ; une dimension radiale de la section de sortie d'air (1-4) est plus grande que le diamètre le plus grand de la section de guidage d'air (1-2) ; le corps de séparation (2-2) correspond à et s'intègre sur une partie supérieure de la section de sortie d'air (1-4) ; le corps de séparation (2-2) forme la cloison.

3. Dispositif utilisant de l'air pour refroidir un verre trempé selon la revendication 2, dans lequel une section transversale de la section de sortie d'air (1-4) a une forme circulaire ; les surfaces du côté extérieur du corps de séparation (2-2) sont des surfaces en arc circulaires qui correspondent à la section transversale circulaire de la section de sortie d'air (1-4).

4. Dispositif utilisant de l'air pour refroidir un verre trempé selon la revendication 2, dans lequel le passage de guidage d'air fuselé (3) a une même surface transversale au niveau de n'importe laquelle de ses sections transversales.

5. Dispositif utilisant de l'air pour refroidir un verre trempé selon la revendication 4, dans lequel une conicité de la section de guidage d'air (1-2) est de 30 à 120 degrés ; une conicité du corps fuselé (2-1) est de 35 à 150 degrés.

6. Dispositif utilisant de l'air pour refroidir un verre trempé selon la revendication 2, dans lequel une section transversale de la section d'entrée d'air (1-3) est de forme circulaire ; une pointe du corps fuselé (2-1) se projette dans la section d'entrée d'air (1-3) ; la pointe du corps fuselé (2-1) se présente sous la forme d'une tête ronde ; un centre de la pointe coïncide avec une ligne centrale de la section d'entrée d'air (1-3).

7. Dispositif utilisant de l'air pour refroidir un verre trempé selon la revendication 1, dans lequel le corps de boitier dans la buse d'air (15) est formé sous forme de pièce unique avec la conduite d'air à haute pression (5) ; une cavité interne de la buse d'air (15) communique avec le passage interne (5-1) de la conduite d'air à haute pression (5).

8. Dispositif utilisant de l'air pour refroidir un verre trempé selon la revendication 1, dans lequel une forme que les deux sorties d'air en forme d'arc (4) de chaque buse d'air (15) projette sur une surface de verre dans une direction d'échappement d'air a la forme d'une paire de parenthèses ; de multiples paires de parenthèses projetées par une pluralité de buses d'air (15) sont reliées séquentiellement.

9. Dispositif utilisant de l'air pour refroidir un verre trempé selon la revendication 1, dans lequel la conduite d'air à haute pression (5) et la conduite d'air à basse pression (6) sont reliées l'une à l'autre au niveau d'une paroi latérale correspondant à la face d'extrémité d'échappement d'air ; un milieu de la face d'extrémité d'échappement d'air est une section horizontale (7) ; les buses d'air (15) sont fournies sur la section horizontale (7) ; deux côtés du milieu de la face d'extrémité d'échappement d'air sont des sections en pente (8) respectivement, les sorties d'air (6-2) sont fournies sur les sections en pente (8).
